# EUROPEAN PATENT APPLICATION

(11) **EP 4 411 361 A1**
(43) Date of publication of application: **07.08.2024**
(21) Application number: 22875962.7
(22) Date of filing: 21.09.2022
(51) Int. Cl.: G01N 27/333, G01N 27/28, G01N 27/30, G01N 27/416

(54) **MICRO ANALYSIS CHIP, ELECTROLYTE CONCENTRATION MEASURING SYSTEM, AND ELECTROLYTE CONCENTRATION MEASURING METHOD**

(30) Priority: 28.09.2021 JP 2021158507
(71) Applicant: CANON KABUSHIKI KAISHA, Tokyo 146-8501 (JP)
(72) Inventor: IKAMI Yasukazu, Tokyo 146-8501 (JP); FUKATSU Makoto, Tokyo 146-8501 (JP); MIURA Jun, Tokyo 146-8501 (JP); TANAKA Masanori, Tokyo 146-8501 (JP); MAEDA Harunobu, Tokyo 146-8501 (JP); ENOKIDO Fuka, Tokyo 146-8501 (JP); MATSUKAWA Akihisa, Tokyo 146-8501 (JP); ABE Katsuichi, Tokyo 146-8501 (JP); MIYAZAKI Keiji, Tokyo 146-8501 (JP); YAMAMOTO Takeshi, Tokyo 146-8501 (JP)
(74) Representative: TBK
(86) International application number: PCT/JP2022/035105
(87) International publication number: WO 2023/054095

(57) **Abstract**

An object is to provide a micro-analysis chip in which a satisfactory area of contact between a specimen and an ion-selective membrane and an adequate amount of the specimen that reacts with the ion-selective membrane can be secured, and which is excellent both in measurement sensitivity and in ion selectivity. In order to achieve the object, a micro-analysis chip as described below is provided. That is, provided is a micro-analysis chip including a channel region which is surrounded by a channel wall provided inside a porous substrate. The channel region includes a first channel chamber containing a reference electrode, a second channel chamber containing a working electrode. The working electrode is covered with an ion-selective membrane containing an ingredient that has ion selectivity. The ion-selective membrane has an exposed surface serving as a dispensing section to which a specimen is dispensed.

## Description

### [Technical Field]

The present invention relates to a micro-analysis chip in which a microchannel is formed inside a porous substrate, and an electrolyte concentration measuring system and an electrolyte concentration measuring method which use the micro-analysis chip.

### [Background Art]

In recent years, a micro-analysis chip that can perform analysis in biochemistry in one chip efficiently through utilization of a microsize fine channel has been attracting attention in a wide variety of fields. Specifically, the development has been attracting attention in the respective fields of, for example, medicine, drug discovery, healthcare, environment, and food as well as biochemical research.

In the former half of 1990s, a micro-analysis chip for performing the pretreatment, stirring, mixing, reaction, and detection of a sample on one chip was developed by forming a fine channel of a micrometer size on glass or silicon through use of, for example, a photolithography method or a metal mold. As a result, for example, the downsizing of a test system and an increase in analysis speed thereof, and a reduction in amount of a specimen or a waste liquid were achieved.

Electrochemical analysis is analysis of measuring a potential between electrodes immersed in a specimen to be analyzed, and is widely used in fields such as medicine and environment. A conventional electrochemical analysis is performed through use of advanced equipment by a technical expert, and hence fields and resources for performing the measurement are restricted to some extent. However, there are needs for a micro-analysis chip for electrochemical analysis that is inexpensive, easy to handle, and disposable for use in, for example, medical treatment in developing countries, remote places, and disaster sites where medical equipment is insufficient, and an airport where the spread of an infectious disease is required to be prevented at the border.

In Non Patent Literature 1, there is proposed a filter-paper-based measurement device for concentrations of Na ions and K ions. This device has a dispensing section to which a specimen is to be dispensed, and the dispensed specimen permeates from the dispensing section to a region of each of the working electrode and the reference electrode to electrically connect both electrodes to each other, thereby allowing potentiometry to be performed. Further, in the above-mentioned device, in order to obtain a stable potential in the reference electrode, a KCl ion crystal is deposited on the reference electrode so that, at the time of measurement, KCl is dissolved into the specimen in measuring. In this manner, Cl ions in the reference electrode region are kept at high concentration, and thus a stable potential of the reference electrode is obtained. Moreover, only ions to be measured are selected by an ion-selective membrane formed so as to cover the working electrode so that measurement is allowed without being influenced by other ions.

Further, in Patent Literature 1, there is disclosed a method of measuring a concentration of a specific protein contained in a biological sample. The concentration of the specific protein is measured by placing a fluorescent substance in a sensing region which is defined by a hydrophobic barrier formed on a paper substrate, and then analyzing a fluorescent signal which is generated by a reaction with the sample. It is stated in Patent Literature 1 that the sensing region formed by the hydrophobic barrier and a sampling region (biological sample dispensing section) can be the same region.

### [Citation List]

### [Patent Literature]

PTL 1: Japanese Patent No. 6415827

### [Non Patent Literature]

NPL 1: Nipapan Ruecha, Orawon Chailapakul, Koji Suzuki and Daniel Citterio, 'Fully Inkjet-Printed Paper-Based Potentiometric Ion-Sensing Devices,' Analytical Chemistry August 29, 2017 published, 89, pp. 10,608-10,616

### [Summary of Invention]

### [Technical Problem]

However, with configurations as described above, selectivity of a specific ion contained in a specimen becomes unstable and a high precision of concentration measurement of the specimen is consequently not acquired in some cases.

With a configuration of Non-Patent Literature 1, the specimen dispensed on a surface of a porous substrate permeates from the surface of the porous substrate to an inside of the porous substrate, further permeates to a region of the working electrode and a region of the reference electrode, and comes into contact with the ion-selective membrane formed in the porous substrate. A target ion contained in the specimen is then selected by the ion-selective membrane and reaches the working electrode. Macroscopically, the contact between the specimen and the ion-selective membrane is limited to a surface of a boundary between the porous substrate and the ion-selective membrane inside the porous substrate. Accordingly, fine control of a condition for forming the ion-selective membrane, such as an adjustment to facilitate permeation of the ion-selective membrane to an air gap portion of the porous substrate so that an area of contact between the porous substrate and the ion-selective membrane in the porous substrate increases, is required in order to acquire a high measurement precision. However, details of a method of controlling the permeation are not disclosed in Non-Patent Literature 1. In addition, an increase in area of the ion-selective membrane for a purpose of lengthening the boundary between the ion-selective membrane and the porous substrate and thereby increasing in area of the surface of the boundary between the ion-selective membrane and the porous substrate causes an increase of the analysis chip in size.

Further, in a configuration of Patent Literature 1, a sensing region formed by a hydrophobic barrier and a sampling region (biological sample dispensing section) may be same, and this ensures contact between the biological sample and a sensing substance in the sensing region. However, electrochemical measurement cannot be done unless the reference electrode and a portion of the working electrode are kept at ion concentrations different from each other. For that reason, the configuration disclosed in Patent Literature 1 without a region that has an ion concentration to serve as a reference (the configuration in which the sensing region and the sampling region (biological sample dispensing section) are same) is not applicable to electrochemical measurement.

In view of the problems described above, an object of the present invention is to provide a micro-analysis chip for electrolyte concentration measurement with which excellent measurement sensitivity and ion selectivity are acquired, as well as an electrolyte concentration measuring system and an electrolyte concentration measuring method.

### [Solution to Problem]

In order to achieve the above-mentioned object, according to one aspect of the present disclosure, there is provided a micro-analysis chip including a channel region which is surrounded by a channel wall provided inside a porous substrate. The channel region includes a first channel chamber, a second channel chamber, and a channel connecting the first channel chamber and the second channel chamber to each other. The first channel chamber includes a reference electrode, and the second channel chamber includes a working electrode. The working electrode is covered with an ion-selective membrane containing an ingredient that has ion selectivity. The ion-selective membrane has an exposed surface serving as a dispensing section to which a specimen is dispensed.

According to another aspect of the present disclosure, there is provided an electrolyte concentration measuring system including: a micro-analysis chip; a specimen supply unit configured to supply a specimen to the micro-analysis chip; and a measurement unit configured to measure a potential difference caused on the micro-analysis chip. The micro-analysis chip includes a channel region surrounded by a channel wall provided inside a porous substrate. The channel region includes a first channel chamber, a second channel chamber, and a channel connecting the first channel chamber and the second channel chamber to each other. The first channel chamber includes a reference electrode, and the second channel chamber includes a working electrode. The working electrode is covered with an ion-selective membrane containing an ingredient that has ion selectivity. The specimen supply unit is configured to supply the specimen so that at least a part of the specimen overlaps with an exposed surface of the ion-selective membrane covering the working electrode. The measurement unit is configured to measure the potential difference caused between the reference electrode and the working electrode by a difference between an ion concentration at the reference electrode and an ion concentration at the working electrode.

According to still another aspect of the present disclosure, there is provided an electrolyte concentration measuring method using a micro-analysis chip. The micro-analysis chip includes a channel region surrounded by a channel wall provided inside a porous substrate. The channel region includes a first channel chamber, a second channel chamber, and a channel connecting the first channel chamber and the second channel chamber to each other. The first channel chamber includes a reference electrode, and the second channel chamber includes a working electrode. The working electrode is covered with an ion-selective membrane containing a component that has ion selectivity. The electrolyte concentration measuring method includes: dispensing a specimen so that at least a part of the specimen overlaps with an exposed surface of the ion-selective membrane covering the working electrode, an ion contained in the dispensed specimen and selected by the ion-selective membrane coming into contact with the working electrode, the dispensed specimen permeating the channel to come into contact with the reference electrode; and measuring a potential difference caused between the reference electrode and the working electrode by a difference between an ion concentration at the reference electrode and an ion concentration at the working electrode.

### [Advantageous Effects of Invention]

According to the one aspect of the present disclosure, it is possible to provide the micro-analysis chip in which an adequate area of contact between the specimen and the ion-selective membrane and an adequate amount of the specimen that reacts with the ion-selective membrane can be secured, and which is excellent in sensitivity of electrolyte concentration measurement and in ion selectivity. In addition, a length of the channel connecting the channel chambers to each other can be shortened by providing the dispensing section in one of the channel chambers in which the ion-selective membrane is located, and the micro-analysis chip can accordingly be reduced in size. According to the other aspects of the present disclosure, the electrolyte concentration measuring system and the electrolyte concentration measuring method which use the micro-analysis chip as described above can be provided.

### [Brief Description of Drawings]

[FIG. 1]

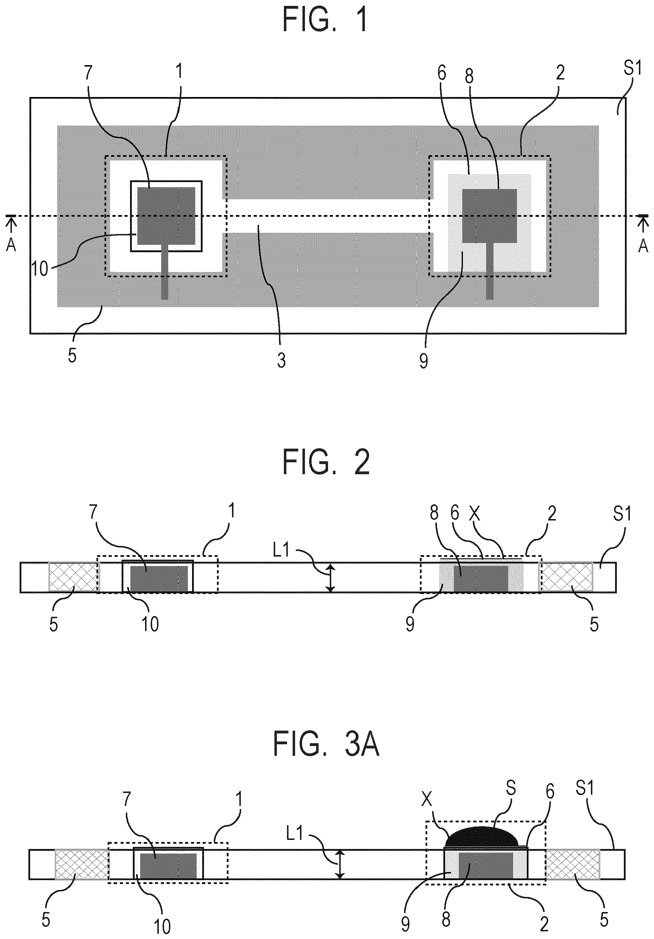

   FIG. 1 is a top view for illustrating a configuration of a micro-analysis chip (P1) according to Example 1.
[FIG. 2]
   FIG. 2 is an A-A sectional view for simply illustrating the micro-analysis chip (P1) illustrated in FIG. 1.
[FIG. 3A]
   FIG. 3A is an example of a schematic view of specimen dispensation in Example 1.
[FIG. 3B]

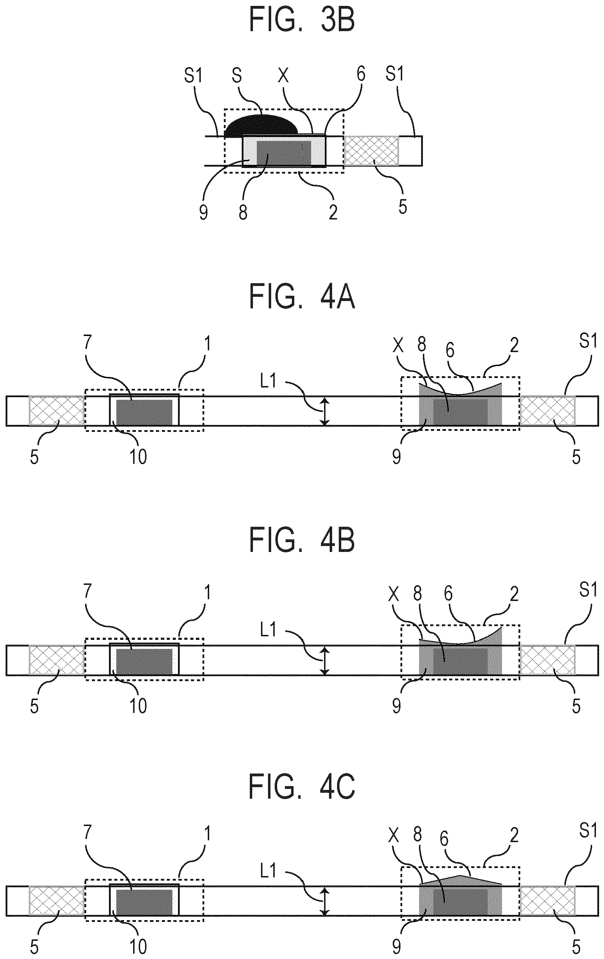

   FIG. 3B is another example of the schematic view of the specimen dispensation in Example 1.
[FIG. 4A]
   FIG. 4A is an example of a sectional view for illustrating another configuration of an exposed surface of an ion-selective membrane in Example 1.
[FIG. 4B]
   FIG. 4B is another example of a sectional view for illustrating another configuration of the exposed surface of the ion-selective membrane in Example 1.
[FIG. 4C]
   FIG. 4C is still another example of a sectional view for illustrating another configuration of the exposed surface of the ion-selective membrane in Example 1.
[FIG. 5A]

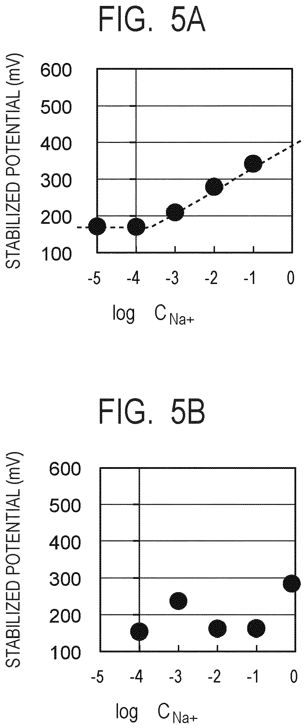

   FIG. 5A is an example of measurement results in Example 1.
[FIG. 5B]
   FIG. 5B is an example of measurement results in Comparative Example 1.
[FIG. 6]

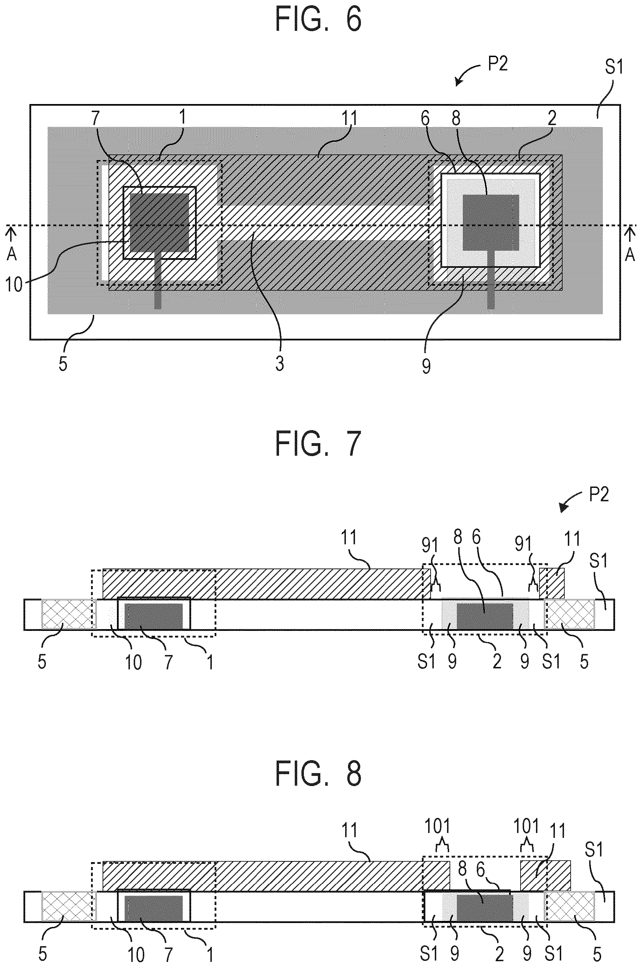

   FIG. 6 is a top view for illustrating a configuration of a micro-analysis chip (P2) according to Example 2.
[FIG. 7]
   FIG. 7 is an A-A sectional view for simply illustrating the micro-analysis chip (P2) illustrated in FIG. 6.
[FIG. 8]
   FIG. 8 is a sectional view for illustrating a configuration in which a part of a regulation member overlaps with a boundary between an ion-selective membrane and a porous substrate.
[FIG. 9]

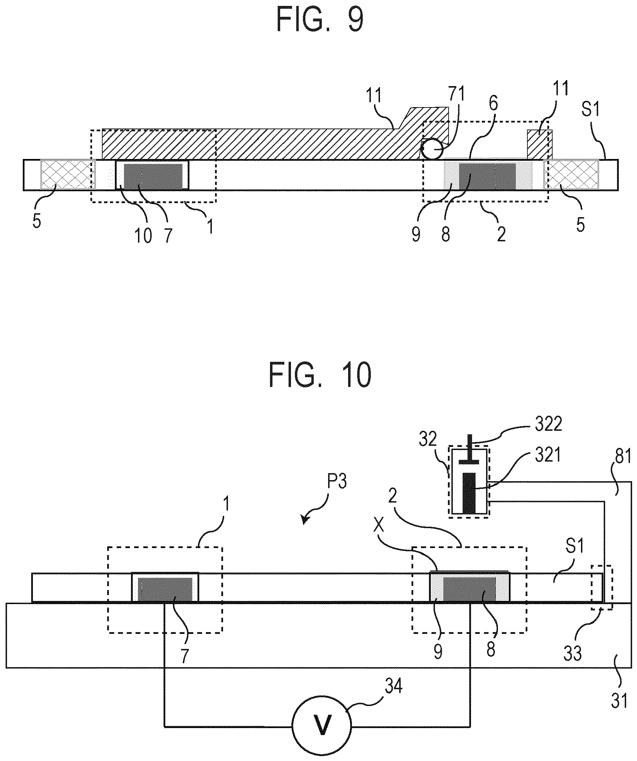

   FIG. 9 is a sectional view for illustrating a configuration in which a spacer is provided under the regulation member overlapping with the boundary between the ion-selective membrane and the porous substrate.
[FIG. 10]
   FIG. 10 is a conceptual diagram for illustrating an example of a configuration of a measurement system according to Example 3.

### [Description of Embodiments]

A micro-analysis chip related to the present invention for solving the above-mentioned problems is described based on the following Examples. The Examples described below are merely examples, and are not intended to limit the technical scope of the present invention only to those Examples.

### <Configuration of Channels>

Schematic views of a micro-analysis chip P1 related to Example 1 are described with reference to FIG. 1 to FIG. 3A and FIG. 3B.

FIG. 1 simply shows a top view of the micro-analysis chip P1.

FIG. 2 is an A-A sectional view for simply illustrating the micro-analysis chip P1 illustrated in FIG. 1.

FIG. 3A and FIG. 3B are schematic illustration of how dispensation on the micro-analysis chip P1 is performed.

The micro-analysis chip includes a channel region surrounded by a channel wall provided inside a porous substrate. A channel pattern is formed in the porous substrate, and includes a channel chamber 1 (first channel chamber), a channel chamber 2 (second channel chamber), and a channel 3. The channel 3 connects the channel chamber 1 (first channel chamber) and the channel chamber 2 (second channel chamber) to each other.

A reference electrode 7 is placed in the channel chamber 1 (first channel chamber). An ion crystal 10 soluble in a specimen covers a top surface and side surfaces of the reference electrode 7. The reference electrode 7 has, as a contact in measurement, a lead wire which is an electrode extended from inside the channel chamber 1 onto a channel wall 5 in a continuous manner.

A working electrode 8 is placed in the channel chamber 2 (second channel chamber). An ion-selective membrane 9 containing an ingredient that has ion selectivity covers a top surface and side surfaces of the working electrode 8. The working electrode 8 has a lead wire which is an electrode extended from inside the channel chamber 2 onto the channel wall 5 in a continuous manner. A dispensing section 6 on which the specimen is dispensed is described later.

### [Example 1]

In Example 1, after a hydrophobic resin was arranged on a paper-made porous substrate S1 having a thickness of L1=0.1 mm and a porosity of 50%, heat fixing was performed so that a channel pattern was formed as the channel wall 5 through which the specimen is impermeable.

Further, in this Example, a paper-made substrate was used as the porous substrate, but the porous substrate is not limited to a paper-made substrate. The porous substrate is only required to cause a capillary action with respect to liquid, and may be a substrate having therein a porous structure, such as an open cell structure or a network structure including a nanofiber structure. The porous substrate may be formed through use of resin, glass, an inorganic substrate, cloth, metal paper, or the like.

Further, although the channel pattern is formed by heat fixing after a hydrophobic resin is placed in this Example, the present invention is not limited thereto. Any method by which the channel pattern can be formed suffices, and a cutting method in which the paper-made porous substrate S1 is cut so that only a channel shape is left, as well as a method in which the channel wall is formed by a wax printer, may be employed.

### <Formulation of Electrodes>

Formulation of the electrodes related to Example 1 is described.

The reference electrode 7 using Ag/AgCl was provided in the channel chamber 1. On the reference electrode 7, 3.5 mg ofKCl ion crystal 10 was placed.

Meanwhile, in the channel chamber 2, the working electrode 8 containing carbon as a main material was provided. The working electrode 8 may be, instead of the carbon electrode, an electrode formed from a conductive polymer such as a dispersion element of polyethylene dioxythiophene and polystyrene sulfonic acid (PEDOT:PSS). A material that has been used hitherto as a base of a reference electrode, such as Ag/AgCl, is also usable.

The Na-ion-selective membrane 9 was formed so as to cover the working electrode 8. The ion-selective membrane 9 was formed from the following materials.
Bis(12-crown-4) as an ion-selective material: 3.0 wt%
Potassium tetrakis(4-chlorophenyl)borate as an anion eliminator: 0.5 wt% o-nitro phenyl octyl ether: 64.0 wt%
Polyvinyl chloride: 32.5 wt%

In this Example, the reference electrode 7, the working electrode 8, and the ion-selective membrane 9 were formed in the above-mentioned shapes, sizes, materials, etc., but the present invention is not limited thereto.

The material of the ion crystal 10 is only required to contain Cl ions and is not limited to the KCl ion crystal. Mass of the ion crystal 10 to be arranged falls within a range of mass that becomes a saturated solution when the KCI ion crystal is dissolved in pure water having a volume equivalent to a capacity of the channel chamber 1 but is not limited thereto.

In such cases as when a total quantity of ions in the specimen is measured and when only one type of ion is contained, it is not required to select an ion. Accordingly, the working electrode is not required to be covered with the ion selective membrane 9 in those cases.

In a case in which the ion selective membrane 9 covering the working electrode is not used, it is only required to employ such a configuration that: a micro-analysis chip includes a channel region which is surrounded by a channel wall provided inside a porous substrate; the channel region includes a first channel chamber, a second channel chamber, and a channel connecting the first channel chamber and the second channel chamber to each other; the first channel chamber includes a reference electrode, and the second channel chamber includes a working electrode; surfaces of the working electrode are covered by no layer inside the porous substrate or on a surface of the porous substrate; and a portion of the working electrode is a dispensing section to which a specimen is dispensed.

The phrase "surfaces of the working electrode are covered by no layer inside the porous substrate or on a surface of the porous substrate" is for defining that an ion selective membrane or any other type of layer does not exist on surfaces of the working electrode. In other words, when the micro-analysis chip is observed from a front surface of the micro-analysis chip, a structure that appears firstly other than the porous substrate is the working electrode.

In addition, the phase "a portion of the working electrode is a dispensing section to which a specimen is dispensed" means, in a case in which the working electrode is exposed on a surface of the porous substrate, that the micro-analysis chip has a structure in which the specimen is dispensed on an exposed surface thereof, and, in a case in which the working electrode is formed inside the porous substrate, that the micro-analysis chip has a structure in which the specimen is dispensed on a part of a micro-analysis chip surface in which the working electrode exists.

In the electrolyte concentration measuring system and the electrolyte concentration measuring method as well, the specimen is only required to be dispensed onto the working electrode in a case in which the ion selective membrane 9 covering the working electrode is not used.

### <Shape of Dispensing Section and Method of Dispensation>

In this Example, the dispensing section 6 is an exposed surface X of the ion selective membrane 9. The exposed surface X has an area of 5 mm×10 mm (=50 mm²).

Meanwhile, an area of contact between the substrate and the ion selective membrane in a cross section of the porous substrate S1 is (5 mm×a thickness of the porous substrate: 0.1 mm×two surfaces)+(10 mm×the thickness of the porous substrate: 0.1 mm×two surfaces)=3 mm². That is, the area of the exposed surface X is adequately larger than an area of contact between the specimen and the ion selective membrane in a cross section of the porous substrate S1.

Accordingly, the specimen can have an adequately contact with the ion selective membrane 9 over a wide contact area by being dispensed on the exposed surface X. An amount of the dispensed specimen that comes into contact with the ion selective membrane 9 is also adequate.

FIG. 3A is illustration of a cross section of the entire micro-analysis chip, and FIG. 3B is an enlarged view of a cross section around the channel chamber 2 alone instead of the entire micro-analysis chip. In FIG. 3A and FIG. 3B, a dispensed specimen S is painted in solid black.

As illustrated in FIG. 3A, an entire specimen immediately after being dispensed may rest on the exposed surface X of the ion selective membrane 9.

Further, as illustrated in FIG. 3B, a part of the specimen immediately after being dispensed may rest on the exposed surface X of the ion-selective membrane 9 whereas other parts of the specimen may rest on the porous substrate S1. That is, the specimen may be dispensed on a boundary portion between the ion-selective membrane 9 and the porous substrate S1 in the second channel chamber. It is required that a part of the specimen rests on the exposed surface X of the ion-selective membrane 9.

Portions painted in solid black in FIG. 3A and FIG. 3B represent how the specimen immediately after being dispensed and the specimen wets and spreads over the ion-selective membrane 9 after being dispensed.

### <Permeation of Specimen>

Permeation of the specimen is described. After the dispensation, an ion contained in the specimen and selected by the ion-selective membrane 9 permeates toward the working electrode 8. In parallel to the permeation, the specimen wet and spread over the exposed surface X, came into contact with the porous substrate present around the ion-selective membrane 9, permeated the porous substrate, and permeated the channel 3 and the channel chamber 1 in the stated order by capillary action.

During the permeation of the specimen into the channel chamber 1, the ion contained in the specimen which was in contact with the exposed surface X was selected by the ion-selective membrane 9, and a measured potential of the working electrode 8 was consequently stabilized at a level required for measurement of electrolyte concentration.

### <Measurement of Specimen Concentration>

Measurement of a specimen concentration is described.

When the specimen permeates and reaches the KCl ion crystal 10 covering the reference electrode 7, the KCl ion crystal 10 dissolves in the specimen and a Cl ion concentration in a solution within the channel chamber 1 reaches saturation. At this time, in a case in which the measured potential of the working electrode 8 is stable, the concentration of the specimen is measurable and the measurement of the specimen concentration is finished after a predetermined measurement time elapses.

In this Example, the "ion selection by the ion-selective membrane" and the "permeation of the specimen into the reference electrode" progress in parallel, and it is accordingly easy to accomplish a condition in which the potential of the working electrode is stable when the specimen reaches the reference electrode 7.

A case in which the exposed surface X is the dispensing section 6 is described in this Example. As long as a dispensed volume of the specimen is equal to or more than a volume at which the specimen can reach the channel chamber 1 through a space above the exposed surface X, the channel chamber 2, and the channel 3, a adequately amount of specimen comes into contact with the ion-selective membrane 9, and the specimen concentration can consequently be measured between the working electrode and the reference electrode with an excellent precision.

As illustrated in FIG. 4A, the exposed surface X of the ion-selective membrane 9 is preferred to have a central portion that is lower than a surrounding portion surrounding the central portion so as to slope from the low central portion toward the high surrounding portion. The slope of the exposed surface X enables the specimen to settle at a center of the ion-selective membrane spontaneously even when the specimen is dispensed at a position slightly off the central portion, or when the concentration, surface tension, and the like vary from specimen to specimen.

When the slope configuration is tilted toward a channel side (height of the surrounding portion on the channel side is set lower than height on a side opposite from the channel) as illustrated in FIG. 4B, a configuration that facilitates permeation of the specimen into the porous substrate in the channel chamber 2 is further acquired.

A converse configuration in which the exposed surface X of the ion-selective membrane 9 has a central portion higher than a surrounding portion surrounding the central portion so as to slope from the high central portion toward the low surrounding portion may also be employed as illustrated in FIG. 4C. This configuration enables specimens different from one another in concentration and surface tension to come into contact with the ion-selective membrane 9 over a wide area of the exposed surface X and permeate the porous substrate in the channel chamber 2 definitely.

For example, a configuration that facilitates effortless settlement at the center of the ion-selective membrane, such as the one illustrated in FIG. 4A, is suitable for a specimen which is low in viscosity. The configuration of FIG. 4B further enables the specimen collected at the center to permeate a porous member. For a specimen which is high in viscosity, on the other hand, a configuration that facilitates permeation of the specimen into the porous substrate in the channel chamber 2, such as the one illustrated in FIG. 4C, is suitable.

As described above, the exposed surface of the ion-selective membrane is preferred to have a height difference between the central portion and the surrounding portion surrounding the central portion, and a configuration in which the central portion is low and the surrounding portion is high and a configuration in which, conversely, the central portion is high and the surrounding portion is low are both employable.

### [Comparative Example 1]

Comparative Example 1 is given in order to describe the effects of Example 1 in more detail.

### <Configuration of Channel and Shape of Dispensing Section>

A channel wall of a micro-analysis chip was given the same shape as in Example 1. Configurations of a reference electrode, a working electrode, an ion-selective membrane, and others were also the same as in Example 1. However, a dispensing section was not an exposed surface of the ion-selective membrane but a middle point in the channel 3 which is at an equal distance from the channel chamber 1 and from the channel chamber 2.

### <Permeation of Specimen>

The dispensed specimen started permeating from the dispensing section in both of a direction toward the channel chamber 1 and a direction toward the channel chamber 2 simultaneously and reached the channel chamber 1 and the channel chamber 2 simultaneously. The specimen that reached the channel chamber 1 dissolved a KCl crystal of the reference electrode as in Example 1 and formed a Cl ion solution having a saturating concentration.

Meanwhile, the specimen that reached the channel chamber 2 came into contact with the ion-selective membrane 9 mainly at a boundary position between the porous substrate and the ion-selective membrane 9 in a cross section of the porous substrate. For that reason, adequate measurement sensitivity and ion selectivity were not acquired in some cases, depending on a condition of permeation of an ion-selective member into a gap portion of the porous substrate, and on a placement form in which the ion-selective membrane is placed inside the porous substrate.

### [Effects of Example 1]

### [Points of Example 1 Superior to Comparative Example 1]

Points of Example 1 that are superior to Comparative Example 1 are described.

Measurement was performed by using, as an electrolyte concentration measuring method, a fixed interference method defined in JIS K 0122: General Rules for Ion Selective Electrode Method.

A solution containing a target ion to be measured was an NaCl solution, and a KCl solution was selected as a solution containing a coexisting ion.

With a concentration of KCl fixed to 10 mmol/L, a concentration of NaCl was changed in five stages which were 10 µmol/L, 100 µmol/L, 1 mmol/L, 10 mmol/L, and 100 mmol/L. An amount of the dispensed specimen was from 30 µL to 50 µL.

Experimental results are shown in FIG. 5A and FIG. 5B. Relationships between a logarithmic Na ion concentration (log C_{Na+}) and the measured potential (a stabilized potential) in Example 1 and Comparative Example 1 are shown in FIG. 5A and FIG. 5B, respectively.

Sensitivity indicates a gradient of a region in which a gradient of the measured potential to the logarithmic Na ion concentration is a non-negative constant value. An ion selectivity coefficient indicates by how many digits a concentration of the target ion that is detectable is smaller than a concentration of the coexisting K ion and is more preferred when increasing more in a negative direction.

As shown in FIG. 5A, a rising point of a non-negative line in Example 1 was within a range of the logarithmic Na ion concentration from -4 (mol/L) to -3.5 (mol/L). The logarithmic concentration of the coexisting K ion is -2 in this Example, and, accordingly, the graph indicates that a concentration of a target Na ion that is measurable is smaller than the coexisting K ion concentration by one digit or more.

Meanwhile, in Comparative Example 1, a region in which the measured potential rose was difficult to be determined as shown in FIG. 5B, and determination of the ion selectivity coefficient and the sensitivity was unstable as well.

The results are gathered in Table 1. In Example 1, a degree of sensitivity required for measurement was acquired and ion selectivity was also excellent. In Comparative Example 1, ion selectivity was not constant in measurements that varied in ion concentration, and the results show some cases in which concentration measurement was consequently unstable.

The results prove that the configuration of Example 1 is effective for electrolyte concentration measurement because the amount of the specimen that reacts with the ion-selective membrane 9 can be increased by increasing the area of the ion-selective membrane 9 that is in contact with the specimen, and excellent measurement sensitivity and ion selectivity are acquired as a result. In addition, the length of the channel 3 connecting the channel chamber 1 and the channel chamber 2 to each other can be shortened by providing the dispensing section 6 in the channel chamber 2 in which the ion-selective membrane 9 is located, and hence, the shortening can lead to a decrease in size of the device (micro-analysis chip).

### [Table 1]

**Table 1**

| | Example 1 | Comparative Example 1 |
|---|---|---|
| Sensitivity | 66.0 | Unstable |
| Ion selectivity coefficient | -1.60 | Unstable |

### [Example 2]

A micro-analysis chip P2 in Example 2 is described.

FIG. 6 is a top view for illustrating a schematic configuration of the micro-analysis chip P2.

FIG. 7 is an A-A sectional view for simply illustrating the micro-analysis chip P2 illustrated in FIG. 6.

Hatched portions in FIG. 6 and FIG. 7 represent a regulation member 11. As illustrated in FIG. 6 and FIG. 7, the micro-analysis chip P2 of this Example includes the regulation member 11 which is impermeable by the specimen and which covers almost the entire channel chamber 1, the entire channel 3, and a portion of the channel chamber 2 that is around the dispensing section 6. A laminate film made of polyethylene terephthalate (PET), for example, is usable as the regulation member 11.

The regulation member 11 covers a surrounding of the dispensing section 6 in the channel chamber 2 and has an opening portion that exposes a top surface of the ion-selective membrane 9. This substantially prevents dispensation in places other than the exposed surface X of the ion-selective membrane 9, and the opening portion of the regulation member 11 serves as the dispensing section 6. A specimen dispensed in the dispensing section 6 wets and spreads over the exposed surface X of the ion-selective membrane 9, permeates into the porous substrate S1 from an exposed portion 91 of the porous substrate S1, and permeates into the channel.

As illustrated in FIG. 8, the regulation member 11 may be configured so that a part (an edge portion of the opening portion) of the regulation member 11 overlaps with a boundary between the ion-selective membrane 9 and the porous substrate S1 on a top surface of the porous substrate S1, by reducing the opening portion in size.

However, when a bottom surface of the regulation member 11 and the top surface of the ion-selective membrane 9 are adhered in a portion 101, which is a boundary portion between the ion-selective membrane 9 and the porous substrate S1 and with which the edge portion of the opening portion of the regulation member 11 overlaps, the specimen dispensed in the dispensing section 6 (the top surface of the ion-selective membrane 9) cannot permeate the bottom surface of the regulation member 11 and, as a result, the dispensed specimen cannot permeate the porous substrate S1.

This is required to be addressed by, for example, providing a non-adhered portion in a part of an overlapping portion in which the bottom surface of the regulation member 11 and the top surface of the ion-selective membrane 9 overlap, so that the dispensed specimen can permeate the porous substrate S1 from the non-adhered portion.

Further, as illustrated in FIG. 9, a spacer 71 may be inserted between the bottom surface of the regulation member 11 and the top surface of the ion-selective membrane 9 in the overlapping portion in which the bottom surface of the regulation member 11 and the top surface of the ion-selective membrane 9 overlap. The insertion of the spacer 71 enables the dispensed specimen to permeate into the porous substrate S1 from the top surface of the ion-selective membrane 9 around the inserted spacer 71.

In analysis with use of the micro-analysis chip, particularly when dispensation is manually performed, it is required to ensure that, even by a manual procedure, the specimen is dispensed onto the exposed surface of the ion-selective membrane 9. Accordingly, the micro-analysis chip is preferred to have a configuration using a regulation member which is impermeable by the specimen to cover a surrounding of the ion-selective membrane 9 and prevent dispensation in places other than the exposed surface X of the ion-selective membrane which is not covered with the regulation member as in this Example.

### [Example 3]

Example 3 is described.

A micro-analysis chip is sometimes used as a part of an electrolyte concentration measuring system (hereinafter may simply be referred to as "measurement system" in places) which measures a plurality of examination chips in order.

FIG. 10 is conceptual illustration of an example of the measurement system.

An analysis chip P3 is placed on a measurement table 31. The measurement system is also equipped with a dispenser (specimen supply unit) 32. The dispenser 32 includes a specimen container 321 in which a specimen is contained, and a supply device 322 for supplying the specimen based on a signal from an outside. The specimen container 321 and the supply device 322 may be integrated into a pipette, or may be designed so that the specimen contained in the specimen container 321 is supplied in a fixed quantity to the analysis chip P3 by the supply device 322 applying pressure to the contained specimen based on a signal received from the outside. The dispenser 32 is supported by a dispenser support arm 81 provided on the measurement table 31.

The analysis chip P3 can be positioned in relation to the measurement system with use of a stepped shape (not shown) or the like formed in a positioning portion 33, which is provided in one or both of the measurement table 31 and the dispenser support arm 81. When the analysis chip P3 is positioned at a predetermined position, a relative positional relationship between the dispenser 32 (specimen supply unit) and the dispensing section 6 (the exposed surface of the ion-selective membrane 9) is determined, and a predetermined quantity of the specimen can be dispensed in the dispensing section 6 of the analysis chip P3 definitely.

Further, the analysis chip P3 may have a mark for positioning so that the relative positional relationship is adjusted based on output that indicates detection of the mark by a mark detection unit (not shown) equipped with the measurement system. A camera or the like is usable as the mark detection unit. Such a mechanism enables positioning with an even higher precision, and dispensation of the specimen at a desired point (for example, a central portion of the exposed surface X) on the exposed surface X of the ion-selective membrane 9.

The measurement system further includes a voltage measurement unit 34. The voltage measurement unit 34 measures a potential difference caused on a micro-analysis chip. The voltage measurement unit 34 is connected between the reference electrode 7 and the working electrode 8, and measures a potential difference between the two electrodes which reflects a difference in ion concentration at predetermined timing.

According to the measurement system of this Example, the micro-analysis chip can be placed quickly at a predetermined position on the measurement table, with the result that a predetermined quantity of the specimen can accurately be dispensed on the exposed surface of the ion-selective membrane, and is accordingly suitable as a measurement system for measuring a large number of specimens quickly and accurately.

The present invention is not limited to the embodiments described above, and various changes and modifications can be made without departing from the spirit and scope of the present invention. The following claims are thus appended hereto in order to make the scope of the present invention public.

The present application claims priority based on Japanese Patent Application No. 2021-158507 filed on September 28, 2021, and the entire contents thereof are incorporated herein by reference.

### [Reference Signs List]

1 channel chamber including reference electrode 7
2 channel chamber including working electrode 8
3 channel connecting channel chamber 1 and channel chamber 2 to each other 5 channel wall
6 dispensing section
7 reference electrode
8 working electrode
9 ion-selective membrane
10 ion crystal containing Cl ion
11 regulation member
31 measurement base (measurement table)
32 dispenser
33 positioning portion
34 voltage measurement unit
S specimen
S1 porous substrate
L1 thickness of porous substrate
X exposed surface of ion-selective membrane 9

## Claims

1. A micro-analysis chip comprising a channel region which is surrounded by a channel wall provided inside a porous substrate,
wherein the channel region includes a first channel chamber, a second channel chamber, and a channel connecting the first channel chamber and the second channel chamber to each other,
wherein the first channel chamber includes a reference electrode, and the second channel chamber includes a working electrode,
wherein the working electrode is covered with an ion-selective membrane containing an ingredient that has ion selectivity, and
wherein the ion-selective membrane has an exposed surface serving as a dispensing section to which a specimen is dispensed.

2. The micro-analysis chip according to claim 1, wherein, in the dispensing section, a height difference is created on the exposed surface of the ion-selective membrane between a central portion and a surrounding portion surrounding the central portion.

3. The micro-analysis chip according to claim 1 or 2, wherein a surrounding of the dispensing section is covered with a regulation member impermeable by the specimen.

4. The micro-analysis chip according to any one of claims 1 to 3, further comprising a mark for positioning.

5. An electrolyte concentration measuring system comprising:
a micro-analysis chip;
a specimen supply unit configured to dispense a specimen to the micro-analysis chip; and
a measurement unit configured to measure a potential difference caused on the micro-analysis chip,
wherein the micro-analysis chip includes a channel region surrounded by a channel wall provided inside a porous substrate,
wherein the channel region includes a first channel chamber, a second channel chamber, and a channel connecting the first channel chamber and the second channel chamber to each other,
wherein the first channel chamber includes a reference electrode, and the second channel chamber includes a working electrode,
wherein the working electrode is covered with an ion-selective membrane containing an ingredient that has ion selectivity,
wherein the specimen supply unit is configured to supply the specimen so that at least a part of the specimen overlaps with an exposed surface of the ion-selective membrane covering the working electrode, and
wherein the measurement unit is configured to measure the potential difference between the reference electrode and the working electrode which reflects a difference in ion concentration.

6. The electrolyte concentration measuring system according to claim 5, further comprising a positioning mechanism configured to determine relative positions between the specimen supply unit and the exposed surface of the ion-selective membrane.

7. An electrolyte concentration measuring method using a micro-analysis chip,
wherein the micro-analysis chip includes a channel region surrounded by a channel wall provided inside a porous substrate,
wherein the channel region includes a first channel chamber, a second channel chamber, and a channel connecting the first channel chamber and the second channel chamber to each other,
wherein the first channel chamber includes a reference electrode, and the second channel chamber includes a working electrode,
wherein the working electrode is covered with an ion-selective membrane containing an ingredient that has ion selectivity, and
the electrolyte concentration measuring method comprising:
dispensing a specimen so that at least a part of the specimen overlaps with an exposed surface of the ion-selective membrane covering the working electrode,
wherein an ion contained in the dispensed specimen and selected by the ion-selective membrane comes into contact with the working electrode,
wherein the dispensed specimen permeating the channel comes into contact with the reference electrode; and
measuring a potential difference between the reference electrode and the working electrode which reflects a difference in ion concentration.

8. The electrolyte concentration measuring method according to claim 7, wherein the specimen is dispensed in a boundary portion between the ion-selective membrane and the porous substrate inside the second channel chamber.

9. A micro-analysis chip comprising a channel region which is surrounded by a channel wall provided inside a porous substrate,
wherein the channel region includes a first channel chamber, a second channel chamber, and a channel connecting the first channel chamber and the second channel chamber to each other,
wherein the first channel chamber includes a reference electrode, and the second channel chamber includes a working electrode,
wherein surfaces of the working electrode are covered by no layer inside the porous substrate or on a surface of the porous substrate, and
wherein a portion of the working electrode is a dispensing section to which a specimen is dispensed.

10. An electrolyte concentration measuring system comprising:
a micro-analysis chip;
a specimen supply unit configured to dispense a specimen to the micro-analysis chip; and
a measurement unit configured to measure a potential difference caused on the micro-analysis chip,
wherein the micro-analysis chip includes a channel region surrounded by a channel wall provided inside a porous substrate,
wherein the channel region includes a first channel chamber, a second channel chamber, and a channel connecting the first channel chamber and the second channel chamber to each other,
wherein the first channel chamber includes a reference electrode, and the second channel chamber includes a working electrode,
wherein surfaces of the working electrode are covered by no layer inside the porous substrate or on a surface of the porous substrate,
wherein the specimen supply unit is configured to supply the specimen so that at least a part of the specimen overlaps with the working electrode, and
wherein the measurement unit is configured to measure the potential difference between the reference electrode and the working electrode which reflects a difference in ion concentration.

11. An electrolyte concentration measuring method using a micro-analysis chip,
wherein the micro-analysis chip includes a channel region surrounded by a channel wall provided inside a porous substrate,
wherein the channel region includes a first channel chamber, a second channel chamber, and a channel connecting the first channel chamber and the second channel chamber to each other,
wherein the first channel chamber includes a reference electrode, and the second channel chamber includes a working electrode,
wherein surfaces of the working electrode is covered by no layer inside the porous substrate or on a surface of the porous substrate, and
the electrolyte concentration measuring method comprising:
dispensing a specimen so that at least a part of the specimen overlaps with the working electrode,
wherein an ion contained in the dispensed specimen comes into contact with the working electrode,
wherein the dispensed specimen permeating the channel comes into contact with the reference electrode; and
measuring a potential difference between the reference electrode and the working electrode which reflects a difference in ion concentration.
